# EUROPÄISCHE PATENTANMELDUNG

(11) **EP 1 640 828 A1**
(43) Veröffentlichungstag der Anmeldung: **29.03.2006**
(21) Anmeldenummer: 04023109.4
(22) Anmeldetag: 28.09.2004
(51) Int. Cl.: G05B 19/05

(54) **Erweiterung eines Engineeringsystems während der Laufzeit**

(71) Anmelder: SIEMENS AKTIENGESELLSCHAFT, 80333 München (DE)
(72) Erfinder: Pfahlmann, Lothar, 91083 Baiersdorf (DE); Schaer, Stephan, 90455 Nürnberg (DE); Schulz, Dietmar, 90574 Rosstal (DE)

(57) **Zusammenfassung**

Die Erfindung betrifft ein Engineeringsystem (1) zur Programmierung und Projektierung eines Programms (2) sowie ein Verfahren zur Erweiterung des Engineeringsystems (1). Um Erweiterungen des Engineeringsystems (1) anwenderfreundlich zu ermöglichen, wird vorgeschlagen, dass das Engineeringsystem (1) eine Schnittstelle (3) aufweist, mit welcher Programmteile (4) zur Erweiterung des Engineeringsystems (1) erfassbar sind und dass das Engineeringsystem (1) Kompiliermittel (5) aufweist, welche zur Kompilierung der Programmteile (4) und zur Einbindung der Programmteile (4) in das Engineeringsystem (1) während der Laufzeit des Engineeringsystems (1) vorgesehen sind.

## Beschreibung

Die Erfindung betrifft ein Engineeringsystem zur Programmierung und Projektierung eines Programms sowie ein Verfahren zur Erweiterung des Engineeringsystems.

Die US 6 600 964 B2 beschreibt ein Verfahren zur Steuerung technischer Prozesse, insbesondere zur Bewegungssteuerung von Produktionsmaschinen, wobei mittels einer zentralen Recheneinheit ein Steuerungsprogramm abgearbeitet wird, das auf einer Instanziierbarkeit sowie einer bedarfsgerechten Verschaltung von Softwarekomponenten mit vorgebbarer, zumindest parametrierbarer Funktionalität basiert.

Der Erfindung liegt die Aufgabe zugrunde, Erweiterungen eines Engineeringsystems zur Programmierung und Projektierung eines Programms anwenderfreundlich zu ermöglichen.

Diese Aufgabe wird durch ein Engineeringsystem zur Programmierung und Projektierung eines Programms gelöst, wobei das Engineeringsystem eine Schnittstelle aufweist, mit welcher Programmteile zur Erweiterung des Engineeringsystems erfassbar sind, wobei das Engineeringsystem Kompiliermittel aufweist, welche zur Kompilierung der Programmteile und zur Einbindung der Programmteile in das Engineeringsystem während der Laufzeit des Engineeringsystems vorgesehen sind.

Diese Aufgabe wird durch ein Verfahren zur Erweiterung eines Engineeringsystems zur Programmierung und Projektierung eines Programms gelöst, bei welchem Verfahren mit einer Schnittstelle Programmteile zur Erweiterung des Engineeringsystems erfasst werden, welche während der Laufzeit des Engineeringsystems kompiliert und in das Engineeringsystem eingebunden werden.

Die Erfindung ermöglicht die Erweiterung eines Engineeringsystems zur Laufzeit des Engineeringsystems auf besonders einfache Art und Weise. War bisher das Engineeringsystem statisch und durch herstellerspezifische Vorgaben festgelegt, so wird es durch die vorgeschlagene Erfindung auch für einen Nutzer des Engineeringsystems erweiterbar. Im Gegensatz zu interpretativen Lösungen (z. B. Skripte, ini-Files) wird durch die vorgeschlagene Erweiterung die Leistungsfähigkeit des Engineeringsystems zur Laufzeit nicht verringert. Über die Schnittstelle erfasste Programmteile zur Erweiterung des Engineeringsystems werden vielmehr dynamisch kompiliert und in das Engineeringsystem eingebunden.

Die anwenderfreundliche Erweiterbarkeit von komplexen Engineeringsystemen, welche üblicherweise in der industriellen Automatisierungstechnik eingesetzt werden, wird gemäß einer vorteilhaften Ausgestaltung der Erfindung erreicht, wenn das Engineeringsystem zur Programmierung und Projektierung eines Steuerungsprogramms eines industriellen Automatisierungssystems vorgesehen ist.

Eine Verwendbarkeit des Engineeringsystems auf verschiedensten Zielsystemen wird dadurch erreicht, dass gemäß einer vorteilhaften Ausgestaltung der Erfindung die Kompiliermittel zur Umsetzung der Programmteile in zielsystemunabhängigen abstrakten Maschinencode vorgesehen sind.

Gemäß einer weiteren vorteilhaften Ausgestaltung der Erfindung wird vorgeschlagen, dass die Schnittstelle derart ausgebildet ist, dass Programmteile in textueller und/oder graphischer Programmiersprache erfassbar sind. Insbesondere Anwender mit erweiterten Programmierkenntnissen können so das Engineeringsystem auch um komplexe anwenderdefinierte Programmteile erweitern.

Um den Anwender bei der Eingabe von Erweiterungen des Engineeringsystems weitestmöglich zu unterstützen, wird gemäß einer weiteren vorteilhaften Ausgestaltung der Erfindung vorgeschlagen, dass die Schnittstelle Eingabemittel zur geführten Eingabe von Programmteilen aufweist. Dies können z. B. menügeführte Eingabemittel oder ein so genannter Wizard sein.

Vorteilhafterweise sind nur Programmteile zur Erweiterung des Engineeringsystems erfassbar, welche sich auf freigebbare Erweiterungen des Engineeringsystems beziehen. Damit kann der Zugriff eines Anwenders auf das Engineeringsystem auf genau begrenzte Bereiche eingeschränkt werden, um z. B. Änderungen bzw. Erweiterungen an sicherheitskritischen Komponenten des Engineeringsystems zu verhindern.

Gemäß einer weiteren vorteilhaften Ausgestaltung der Erfindung sind Programmteile erfassbar, welche das Engineeringsystem um Mittel zur Beeinflussung von Anwendereingaben in das Engineeringsystem erweitern. Damit wird die benutzerspezifische Beeinflussung von Anwendereingaben ermöglicht.

Insbesondere wird vorgeschlagen, dass Programmteile erfassbar sind, welche das Engineeringsystem um Prüfmittel zur Prüfung und/oder Änderung von Anwendereingaben in das Engineeringsystem erweitern. Im Gegensatz zur bisherigen starren Vorgabe von Prüfungen von Anwendereingaben, sofern überhaupt vorhanden, wird somit die Erweiterung des Engineeringsystem um benutzerspezifisch relevante und angepasste Prüfmittel ermöglicht.

Um Anwendereingaben in das Engineeringsystem benutzerspezifisch auswerten zu können, sind gemäß einer weiteren vorteilhaften Ausgestaltung der Erfindung Programmteile erfassbar, welche das Engineeringsystem um Auswertemittel zur Auswertung von Anwendereingaben in das Engineeringsystem erweitern.

Eine auf den jeweiligen Anwendungsfall zugeschnittene Unterstützung eines Anwenders wird erreicht, wenn Programmteile erfassbar sind, welche das Engineeringsystem um Hilfsmittel zur Unterstützung von Anwendereingaben in das Engineeringsystem erweitern.

Nachfolgend wird die Erfindung anhand der in den Figuren dargestellten Ausführungsbeispiele näher beschrieben und erläutert.

Es zeigen:
- FIG 1: ein Engineeringsystem zur Programmierung und Projektierung eines Steuerungsprogramms eines industriellen Automatisierungssystems,
- FIG 2: die Ansicht einer graphischen Oberfläche als Anwenderschnittstelle eines Engineeringsystems und
- FIG 3: ein in die graphische Oberfläche einblendbares Hilfefenster eines Engineeringsystems.

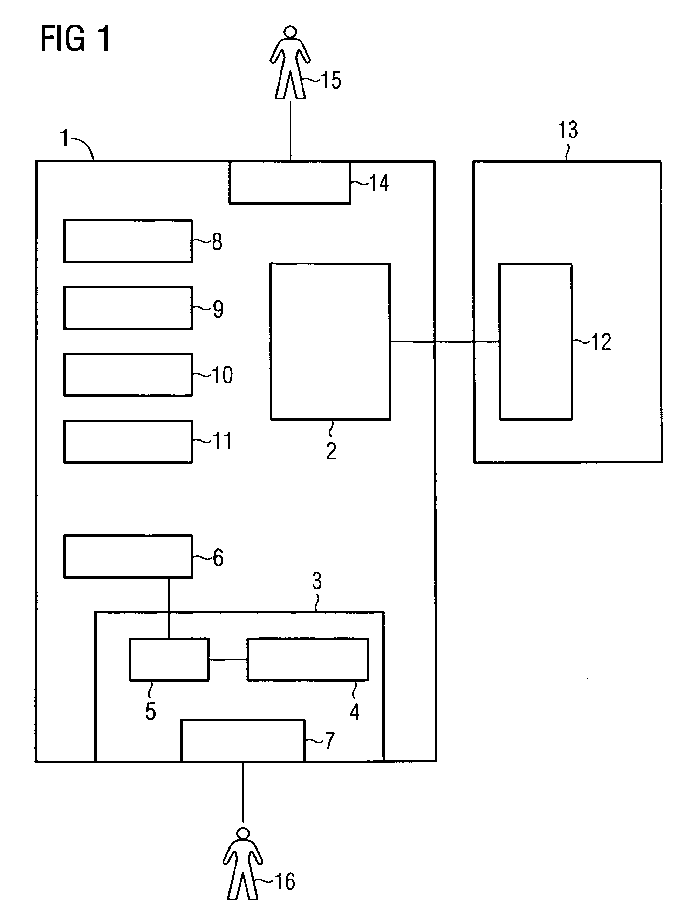

FIG. 1 zeigt ein Engineeringsystem 1 zur Programmierung und Projektierung eines Programms 2. Das Programm 2 wird als Steuerungsprogramm 12 in einem industriellen Automatisierungssystem 13 verwendet. Das Engineeringsystem 1 weist eine Schnittstelle 3 auf, mit welcher Programmteile 4 zur Erweiterung des Engineeringsystems 1 erfassbar sind. Zudem weist das Engineeringsystem 1 Kompiliermittel 5 auf, welche die Programmteile 4 während der Laufzeit des Engineeringsystems 1 kompilieren und in das Engineeringsystem 1 einbinden. Ein Kompiliermittel 5 ist z. B. ein Computerprogramm (auch Compiler oder Übersetzer genannt), das ein in einer Quellsprache geschriebenes Programm in ein semantisch äquivalentes Programm einer Zielsprache umwandelt. Üblicherweise handelt es sich dabei um die Übersetzung eines von einem Programmierer in einer Programmiersprache geschriebenen Quelltextes in eine maschinennahe Sprache. Als Kompiliermittel 5 werden hier auch Compiler bezeichnet, die Code in anderen Programmiersprachen erzeugen können. Die Anwendung eines Kompiliermittels 5 wird als Kompilierung bezeichnet. Gemäß Ausführungsbeispiel der FIG 1 setzen die Kompiliermittel 5 die Programmteile 4 in zielsystemunabhängigen abstrakten Maschinencode 6 um. Dieser wird zur Laufzeit des Engineeringsystems 1 in das Programm 2 eingebunden. Die Schnittstelle 3 des Engineeringsystems 1 weist Eingabemittel 7 zur geführten Eingabe von Programmteilen 4 auf. Die Eingabemittel 7 sind dabei Schnittstelle zu einem ersten Anwender 16. Der erste Anwender 16 erweitert das Engineeringsystem und passt es somit an seine spezifischen Anforderungen an. Ein zweiter Anwender 15 nutzt das Engineeringsystem zur Erstellung, d. h. zur Programmierung und Projektierung, des Programms 2. Die durch den ersten Anwender 16 veranlassten Erweiterungen des Engineeringsystems 1 sind somit für den zweiten Anwender 15 wirksam. Der zweite Anwender 15 kommuniziert mit dem Engineeringsystem über eine Schnittstelle 14. Das Engineeringsystem 1 weist Mittel 8 zur Beeinflussung der Anwendereingaben auf. Gemäß Ausführungsbeispiel sind Prüfmittel 9 zur Prüfung bzw. Änderung von Anwendereingaben in das Engineeringsystem 1, Auswertemittel 10 zur Auswertung der Anwendereingaben sowie Hilfsmittel 11 zur Unterstützung der Anwendereingaben vorgesehen. Anwendereingaben sind in diesem Fall Eingaben des zweiten Anwenders 15.

In dem Automatisierungssystem 13, z. B. einer speicherprogrammierbaren Steuerung, läuft das Steuerungsprogramm 12, auch Anwenderprogramm genannt, das eine Steuerungs- und/oder Regelungsaufgabe realisiert. Das Anwenderprogramm kann entweder mittels geeigneter graphischer Programmiersprache (z. B. KOP, FUP, GRAPH) oder durch eine textuelle Programmiersprache (z. B. AWL, SCL) geschrieben werden. Diesen Programmiersprachen gemeinsam ist, dass das Programm Funktionselemente (Gatter, Operationen, Funktionen, Bausteine, Schritte, Transitionen usw.) in geeigneter Form miteinander verknüpft. Dazu werden den Funktionselementen bei deren Verwendung (Instanziierung genannt) auch geeignete Variablen zugewiesen bzw. verschaltet. Üblicherweise weiß der zweite Anwender 15 bei der Verschaltung bzw. Parametrierung der Funktionselemente nicht genau, welche Variablen zulässig sind, z. B. welcher Wertebereich des Funktionselements einzuhalten ist, welcher Datentyp an diesen Element gültig ist, ob die Deklaration und Verwendung der Variable den geltenden Programmierrichtlinien in der jeweiligen Firma entspricht. Der erste Anwender hat bisher keine Informationen, wenn weitere Aktionen notwendig sind (z. B. Übersetzen, Dokumentation, weitere Implementierung usw.). Zudem ist eine Protokollierung von Verwendungsarten zum Aufstellen von Metriken und Statistiken, z. B. mit dem Ziel der Programmoptimierung, für den ersten Anwender 16 üblicherweise nicht parametrierbar. Dem zweiten Anwender 15 soll zudem bei der Parametrierung der Elemente des Programms 2 ein gewisser Bedienungskomfort zur Verfügung gestellt werden. Denkbar ist z. B. die Bereitstellung eines Alias- oder Makro-Mechanismus um lange wiederholende Parametrierungseingaben zu vereinfachen, die Bereitstellung von benutzerdefinierbaren Online-Hilfen die kontextspezifisch bei Bedarf eingeblendet werden und/oder die Prüfung oder sogar automatische Berichtigung der Eingabe von symbolischen Namen bei der Deklaration (z. B. spezielles Präfix). Bisher wurden nur Basisüberprüfungen durch die Programmier-Software der Hersteller angeboten, beispielsweise ob der Datentyp der Aktual-Variable mit dem verschalteten Element übereinstimmt oder eine Variable überhaupt definiert ist. Programmierrichtlinien und die korrekte technologische Parametrierung sind bisher nur manuell mittels geeigneter Dokumente überprüfbar.

Die hier vorgeschlagene Lösung stellt dem ersten Anwender 16 die Schnittstelle 3 zur Verfügung, durch welche der Anwender 16 per Programm (z. B. in der Programmiersprache C#) eine Reaktion auf die jeweilige Benutzereingabe individuell programmieren kann. Alternativ können Aspekte der vorgeschlagenen Lösung durch Dialoge implizit erstellt werden. Unter Anderem sind folgende Erweiterungen möglich: Eine durch einen zweiten Anwender 15 eingegebene Variable kann, z. B. durch das Durchführen einer Wertebereichsüberprüfung, ausgewertet und/oder verändert werden. Der erste Anwender 16 kann das Ergebnis der Variablenprüfung definieren (zulässig, unzulässig), sowie ein Abprüfen der Verwendung durch Abfrage des Vaterelements bzw. der Nachbarelemente veranlassen. Typkonvertierungen können auf Zulässigkeit geprüft werden. Zudem können individuelle Dialoge und/oder Hilfen im Fehlerfall oder auf Anfrage, insbesondere technologieorientierte Parametrierdialoge, angeboten werden sowie der Aufruf externer Subroutinen und Analysetools veranlasst werden (z. B. Übersetzen, Dokumentation, weitere Implementierung, insbesondere firmenspezifische Case-Tools usw.). Herstellerspezifische Namenskonventionen und Programmierrichtlinien können überwacht werden, Statistiken (Metriken) erstellt werden. Je nach Verwendungszweck kann die Schnittstelle 3 noch zusätzliche Werte liefern bzw. setzen, z. B. zusätzliche Kommentare oder eine Information, von wem der jeweilige Wert geändert wurde (applikationsintern, Benutzer). Ein solches benutzerdefinierbares Verhalten bei der Definition und der Verwendung von Variablen eines Programmierwerkzeugs ist bisher nicht bekannt. Die Erfindung bietet somit eindeutige Vorteile gegenüber dem bisherigen statischen und manuellen herstellerspezifischen Vorgehen.

Das von der Schnittstelle 3 erfasste Programmteil 4 wird nun kompiliert und quasi als Bestandteil der vorhandenen Programmierapplikation eingebunden. Mit kompiliert ist hier auch die Umsetzung in einen Zwischencode (z. B. MSIL) gemeint. In einem solchen Zwischencode vorliegende Programmteile werden in einem weiteren Schritt zeitnah zur Ausführung durch einen so genannten Just-in-time-Compiler in den eigentlichen Maschinencode umgesetzt.

Im Folgenden wird exemplarisch ein Beispiel für den möglichen Aufbau der Schnittstelle beschrieben:

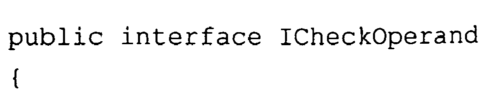

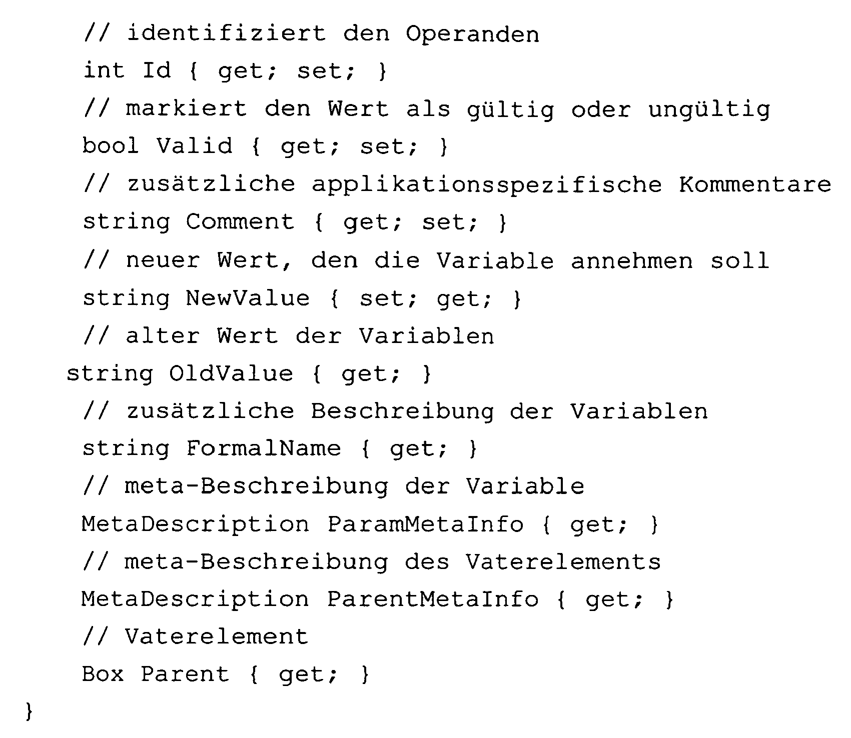

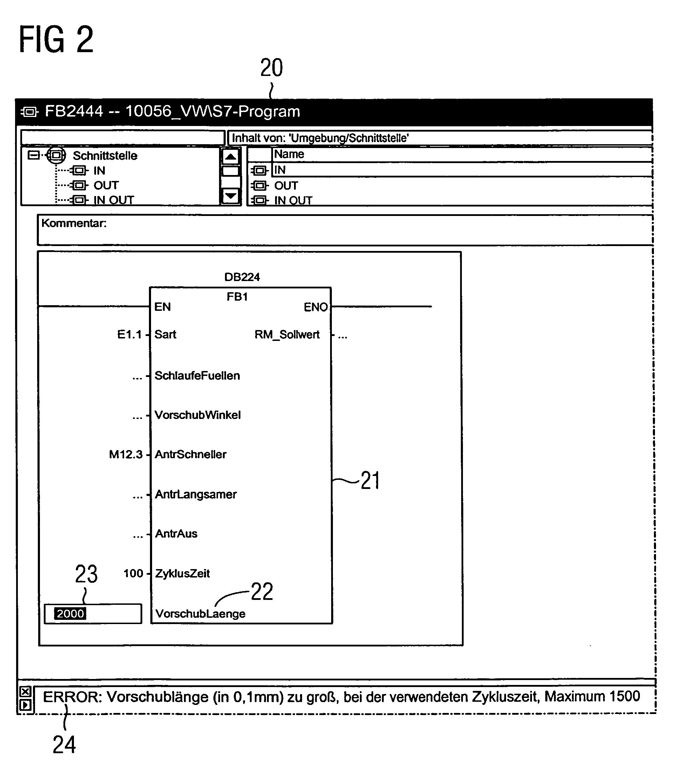

Anhand der beiden folgenden Anwendungsszenarien wird die Erfindung weiter erläutert. Das erste Szenario betrifft die Durchführung von Wertebereichsüberprüfungen und wird anhand FIG 2 erläutert.

Folgende Ausgangssituation sei angenommen: Der zweite Anwender 15 (siehe FIG 1) möchte einen in graphischer Programmiersprache vorliegenden Funktionsbaustein 21 verschalten. Der Funktionsbaustein 21 wurde von einem Zulieferer (z. B. Fremdfirma oder andere Abteilung) geliefert. Der Funktionsbaustein repräsentiert eine bestimmte Technologie, d. h. es sind nur bestimmte Aktualwerte bzw. Verschaltungen sinnvoll und zulässig. Bei Eingabe des dargestellten Netzwerks soll in Abhängigkeit von einer Zykluszeit (hier 100 ms), eine eine Vorschublänge repräsentierende Variable mit einem sinnvollen Wert belegt werden.

Dabei zeigt FIG 2 zeigt einen Ausschnitt 20 einer graphischen Oberfläche, z. B. eines Bildschirms, eines Engineeringsystems 1. Auf der graphischen Oberfläche dargestellt ist der Funktionsbaustein 21, welcher zur Parametrierung durch den zweiten Anwender 15 zur Verfügung steht. Im Ausführungsbeispiel ist der Parameter 22, die Vorschublänge, mit Hilfe eines Eingabefensters 23 eingebbar. Bisher wurde der zweite Anwender 15 nur mit kurzen Tooltips unterstützt, jetzt kann der erste Anwender 16, in diesem Fall also der Zulieferer, eine dynamische Prüffunktion zur korrekten Verwendung des Bausteins 21 einbringen, bzw. zusätzlich weitere Infos in Form von anwenderdefinierbaren Hilfen sichtbar machen. Dadurch kann der Kunde, der zweite Anwender 15, schon bei der Programmierung Fehler vermeiden und Fehlerursachen schneller feststellen. Der hier eingegebene Wert (2000) wird durch Prüfmittel des Engineeringsystems geprüft, wobei festgestellt wird, dass der Wert zu groß ist. Dies wird dem Anwender mit einer Fehlermeldung 24 mitgeteilt.

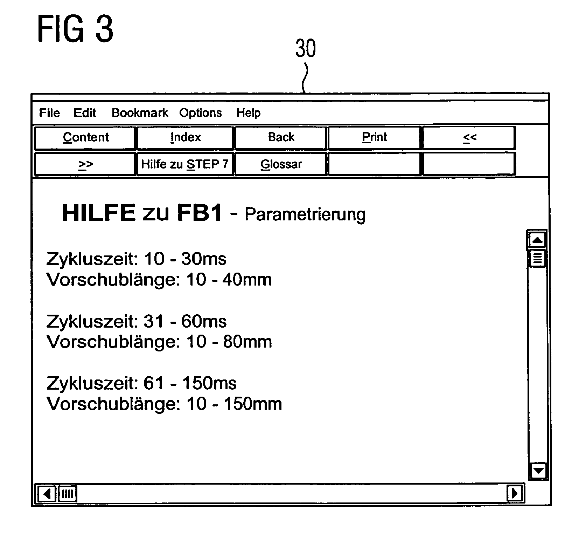

Zusätzlich zu der Fehlermeldung 24 gemäß FIG 2 zeigt FIG 3 eine Hilfefenster 30, welches zur Parametrierung des Parameters 22 des Funktionsbausteins 21 Hilfestellung gibt und insbesondere im Fehlerfall einblendbar ist. Das Hilfefenster 30 ist z. B. mit der graphischen Oberfläche einblendbar.

Das Ausführungsbeispiel gemäß FIG 2 und 3 kann unter Verwendung der vorgeschlagenen Schnittstelle folgendermaßen implementiert werden. Dieses Programmteil wird vom zweiten Anwender 15, welcher z. B. Administratorrechte besitzt, kompiliert und zum Engineeringsystem bzw. einem Teil des Engineeringsystems, in diesem Fall z. B. einem Editor für eine graphische Programmiersprache, dazugebunden und kann je nach Bedarf um weitere Features erweitert werden.

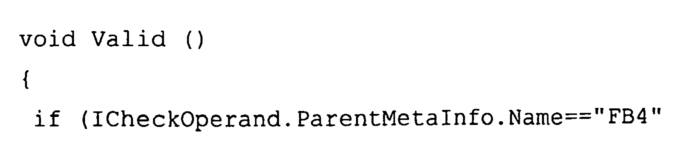

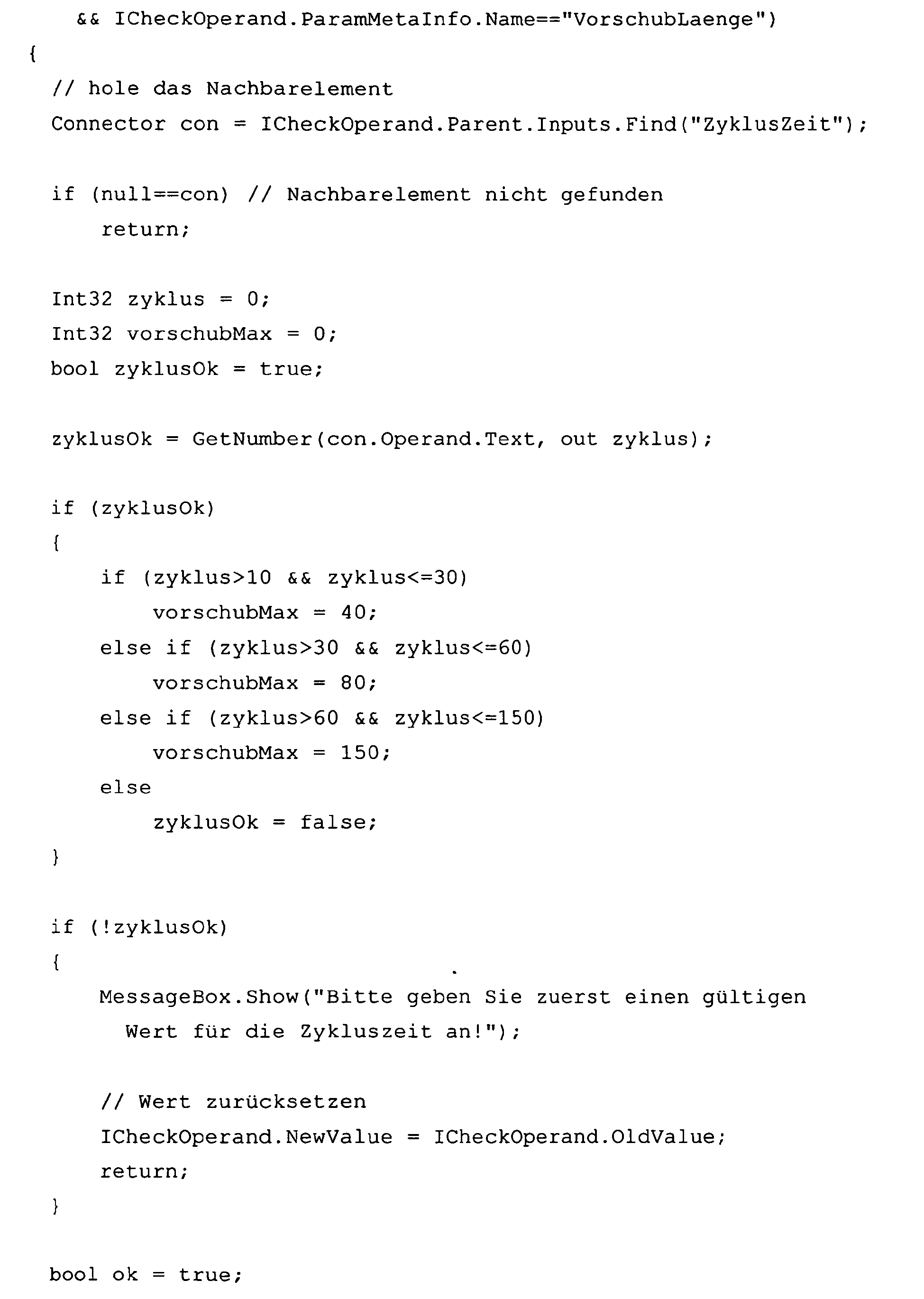

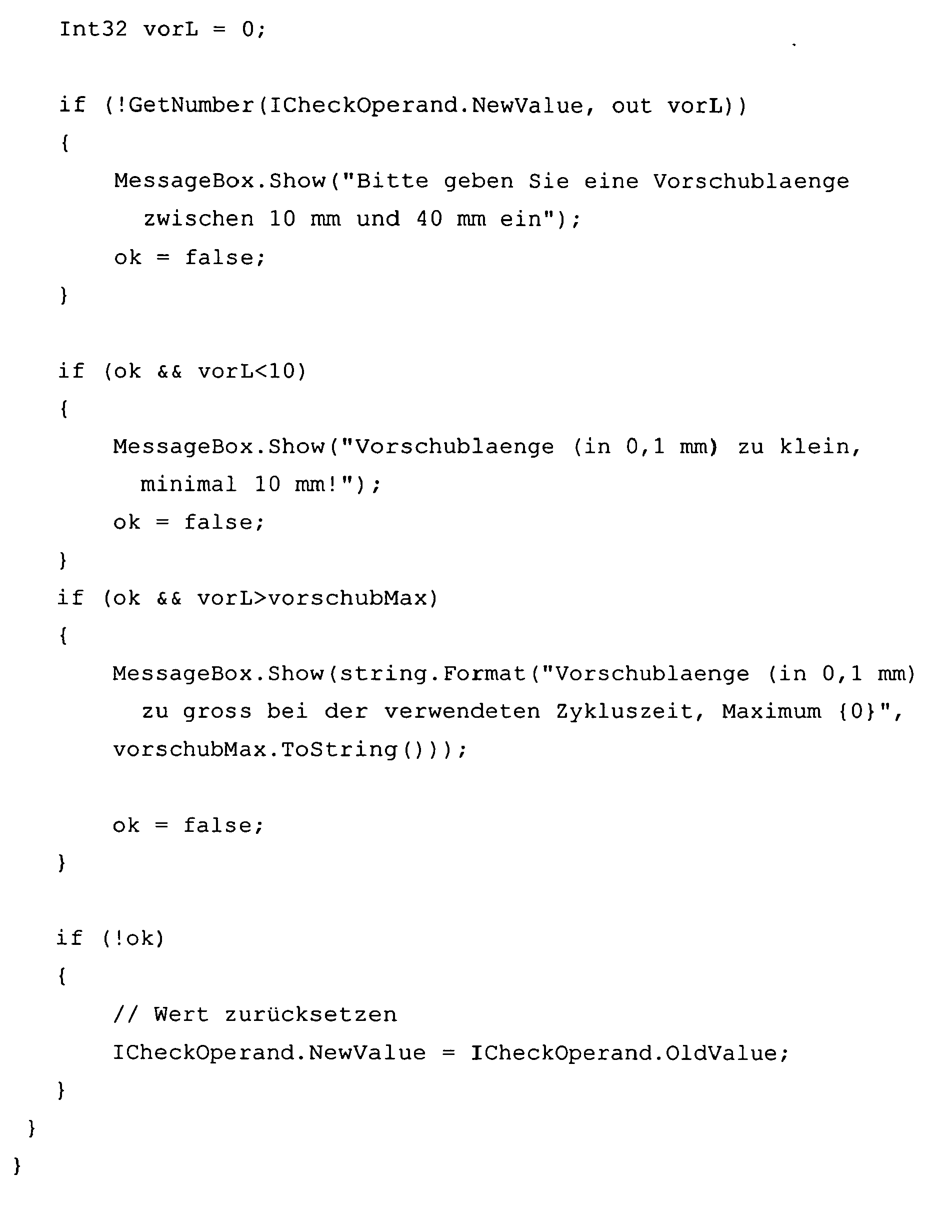

Beim zweiten Anwendungsszenario wird mit Hilfe der Erfindung die Einhaltung von herstellerspezifischen Namenskonventionen überwacht. Symbole müssen üblicherweise mit einem bestimmten Präfix eingeleitet werden (z. B. "CPxx" für Taster, "CSxx" für Spannungsversorgung, "DB_" für Daten). Die Einhaltung dieser Systematik kann durch Erweiterung eines Engineeringsystems durch ein entsprechendes Programmteil überwacht werden.

Je nach Verwendungszweck kann die Schnittstelle noch zusätzliche Werte liefern bzw. setzen, z. B. zusätzliche Kommentare oder von wem der Wert geändert wurde (applikationsintern, Benutzer). Dieses Programmteil wird vom zweiten Anwender 15, welcher z. B. Administrator-Level besitzt, kompiliert und zum Engineeringsystem bzw. einem Teil des Engineeringsystems, in diesem Fall z. B. einem Symbolik-Editor, dazugebunden und kann je nach Bedarf um weitere Features erweitert werden.

Im Folgenden wird exemplarisch ein Beispiel für den möglichen Aufbau der Schnittstelle beschrieben:

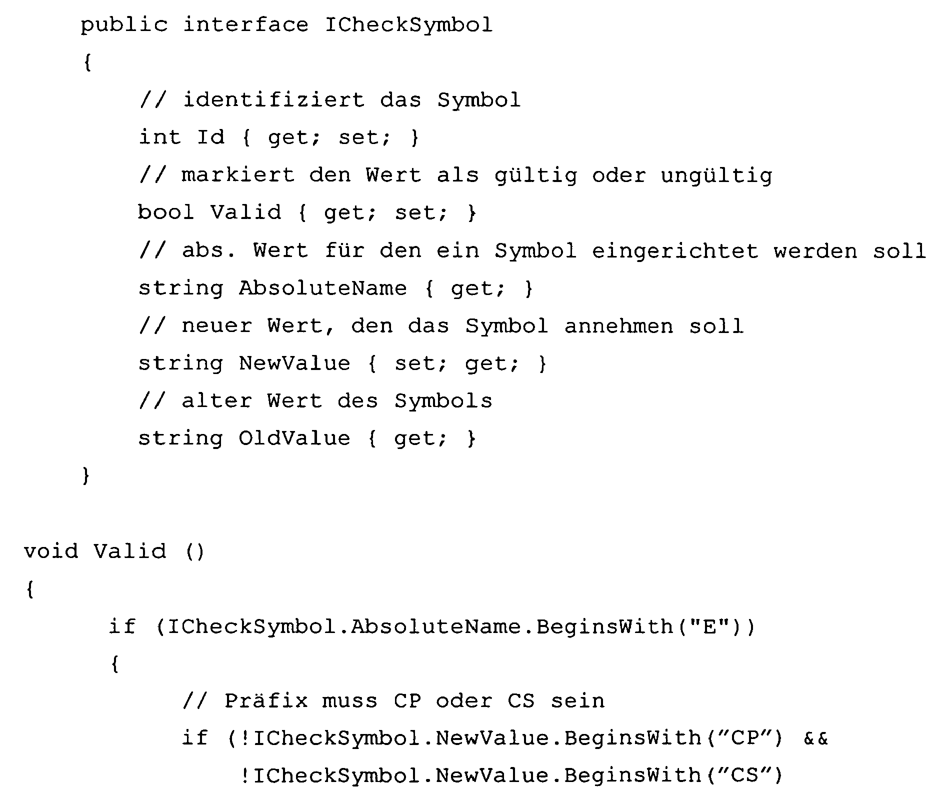

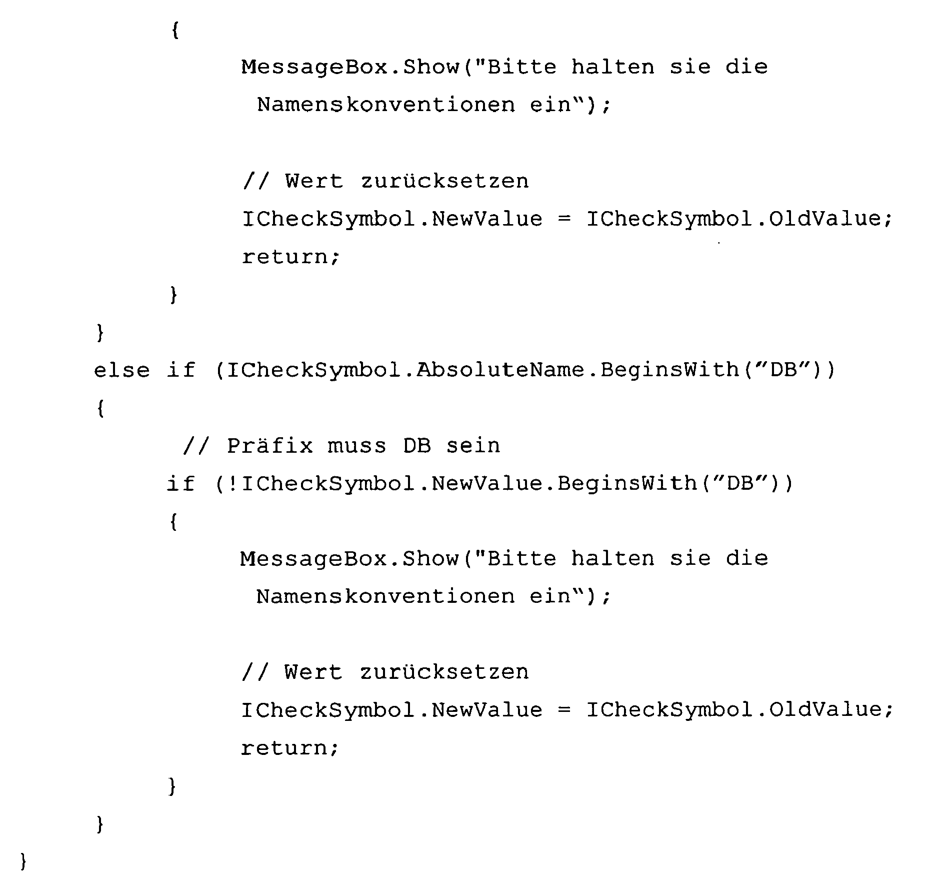

Eine mögliche Ausführungsform der Erfindung kann Mittel der .NET-Programmierumgebung der Firma Microsoft nutzen. Bei .NET werden ausführbare Programme und Laufzeitbibliotheken als so genannte Executable (.EXE) oder Dynamic Link Library (.DLL) abgelegt..NET-Executables und -DLLs enthalten keinen direkt ausführbaren Maschinencode, sondern einen vom jeweiligen Prozessor unabhängigen Zwischencode, die so genannte Microsoft Intermediate Language (MSIL). Die Ausführung des Zwischencodes erfolgt durch die .NET-Laufzeitumgebung, der Common Language Runtime (CLR). Diese wird beim Start einer Anwendung automatisch in den Adressraum des ausführenden Prozesses geladen und übernimmt dann die Kontrolle für die Ausführung des Zwischencodes. Der Zwischencode wird dabei von der CLR nicht interpretiert, sondern vor der ersten Ausführung in einer Programmsitzung dynamisch durch einen Just-in-time-Compiler (JIT) in den Maschinencode des Prozessors des aktuellen Zielsystems umgesetzt. Dies geschieht nicht für das komplette Programmmodul auf einmal, sondern nur für die Programmteile, die direkt zur Ausführung anstehen. Der Zwischencode entspricht dem oben genannten zielsystemunabhängigen abstrakten Maschinencode 6, in welchen die Kompiliermittel 5 die Programmteile 4 umsetzen. Insbesondere in der .NET-Umgebung erstellte Programmteile 4 sind somit während der Laufzeit des Engineeringsystems 1 kompilierbar und in das Engineeringsystem einbindbar.

Zusammengefasst betrifft die Erfindung somit ein Engineeringsystem 1 zur Programmierung und Projektierung eines Programms 2 sowie ein Verfahren zur Erweiterung des Engineeringsystems 1. Um Erweiterungen des Engineeringsystems 1 anwenderfreundlich zu ermöglichen, wird vorgeschlagen, dass das Engineeringsystem 1 eine Schnittstelle 3 aufweist, mit welcher Programmteile 4 zur Erweiterung des Engineeringsystems 1 erfassbar sind und dass das Engineeringsystem 1 Kompiliermittel 5 aufweist, welche zur Kompilierung der Programmteile 4 und zur Einbindung der Programmteile 4 in das Engineeringsystem 1 während der Laufzeit des Engineeringsystems 1 vorgesehen sind.

## Patentansprüche

1. Engineeringsystem (1) zur Programmierung und Projektierung eines Programms (2), wobei das Engineeringsystem (1) eine Schnittstelle (3) aufweist, mit welcher Programmteile (4) zur Erweiterung des Engineeringsystems (1) erfassbar sind, wobei das Engineeringsystem (1) Kompiliermittel (5) aufweist, welche zur Kompilierung der Programmteile (4) und zur Einbindung der Programmteile (4) in das Engineeringsystem (1) während der Laufzeit des Engineeringsystems (1) vorgesehen sind.

2. System nach Anspruch 1,
**dadurch gekennzeichnet,**
**dass** es zur Programmierung und Projektierung eines Steuerungsprogramms (12) eines industriellen Automatisierungssystems (13) vorgesehen ist.

3. System nach Anspruch 1 oder 2,
**dadurch gekennzeichnet ,**
**dass** die Kompiliermittel (5) zur Umsetzung der Programmteile (4) in zielsystemunabhängigen abstrakten Maschinencode (6) vorgesehen sind.

4. System nach einem der vorhergehenden Ansprüche,
**dadurch gekennzeichnet ,**
**dass** die Schnittstelle (3) derart ausgebildet ist, dass Programmteile (4) in textueller und/oder graphischer Programmiersprache erfassbar sind.

5. System nach einem der vorhergehenden Ansprüche,
**dadurch gekennzeichnet ,**
**dass** die Schnittstelle (3) Eingabemittel (7) zur geführten Eingabe von Programmteilen (4) aufweist.

6. System nach einem der vorhergehenden Ansprüche,
**dadurch gekennzeichnet,**
**dass** nur Programmteile (4) zur Erweiterung des Engineeringsystems (1) erfassbar sind, welche sich auf freigebbare Erweiterungen des Engineeringsystems (1) beziehen.

7. System nach einem der vorhergehenden Ansprüche,
**dadurch gekennzeichnet ,**
**dass** Programmteile (4) erfassbar sind, welche das Engineeringsystem (1) um Mittel (8) zur Beeinflussung von Anwendereingaben in das Engineeringsystem (1) erweitern.

8. System nach einem der vorhergehenden Ansprüche,
**dadurch gekennzeichnet,**
**dass** Programmteile (4) erfassbar sind, welche das Engineeringsystem (1) um Prüfmittel (9) zur Prüfung und/oder Änderung von Anwendereingaben in das Engineeringsystem (1) erweitern.

9. System nach einem der vorhergehenden Ansprüche,
**dadurch gekennzeichnet ,**
**dass** Programmteile (4) erfassbar sind, welche das Engineeringsystem (1) um Auswertemittel (10) zur Auswertung von Anwendereingaben in das Engineeringsystem (1) erweitern.

10. System nach einem der vorhergehenden Ansprüche,
**dadurch gekennzeichnet ,**
**dass** Programmteile (4) erfassbar sind, welche das Engineeringsystem (1) um Hilfsmittel (11) zur Unterstützung von Anwendereingaben in das Engineeringsystem (1) erweitern.

11. Verfahren zur Erweiterung eines Engineeringsystem (1) zur Programmierung und Projektierung eines Programms (2), bei welchem Verfahren mit einer Schnittstelle (3) Programmteile (4) zur Erweiterung des Engineeringsystems (1) erfasst werden, welche während der Laufzeit des Engineeringsystems (1) kompiliert und in das Engineeringsystem (1) eingebunden werden.

12. Verfahren nach Anspruch 11,
**dadurch gekennzeichnet ,**
**dass** es zur Erweiterung eines Engineeringsystems (1) vorgesehen ist, welches zur Programmierung und Projektierung eines Steuerungsprogramms (12) eines industriellen Automatisierungssystems (13) vorgesehen ist.

13. Verfahren nach Anspruch 11 oder 12,
**dadurch gekennzeichnet ,**
**dass** die Programmteile (4) in zielsystemunabhängigen abstrakten Maschinencode (6) umgesetzt werden.

14. Verfahren nach einem der Ansprüche 11 bis 13,
**dadurch gekennzeichnet ,**
**dass** Programmteile (4) in textueller und/oder graphischer Programmiersprache erfasst werden.

15. Verfahren nach einem der Ansprüche 11 bis 14,
**dadurch gekennzeichnet ,**
**dass** Programmteile (4) geführt eingebbar sind.

16. Verfahren nach einem der Ansprüche 11 bis 15,
**dadurch gekennzeichnet,**
**dass** nur Programmteile (4) zur Erweiterung des Engineeringsystems (1) erfasst werden, welche sich auf freigebbare Erweiterungen des Engineeringsystems (1) beziehen.

17. Verfahren nach einem der Ansprüche 11 bis 16,
**dadurch gekennzeichnet ,**
**dass** Programmteile (4) erfasst werden, welche das Engineeringsystem (1) derart erweitern, dass Anwendereingaben in das Engineeringsystem (1) beeinflusst werden.

18. Verfahren nach einem der Ansprüche 11 bis 17,
**dadurch gekennzeichnet,**
**dass** Programmteile (4) erfasst werden, welche das Engineeringsystem (1) derart erweitern, dass Anwendereingaben in das Engineeringsystem (1) geprüft und/oder geändert werden.

19. Verfahren nach einem der Ansprüche 11 bis 18,
**dadurch gekennzeichnet,**
**dass** Programmteile (4) erfasst werden, welche das Engineeringsystem (1) derart erweitern, dass Anwendereingaben in das Engineeringsystem (1) ausgewertet werden.

20. Verfahren nach einem der Ansprüche 11 bis 19,
**dadurch gekennzeichnet ,**
**dass** Programmteile (4) erfasst werden, welche das Engineeringsystem (1) derart erweitern, dass Anwendereingaben in das Engineeringsystem (1) durch Hilfsmittel (11) unterstützt werden.
